# FASCICULE DE BREVET EUROPEEN

(11) **EP 1 870 305 B1**
(45) Date de publication et mention de la délivrance du brevet: **22.07.2009**
(21) Numéro de dépôt: 07109102.9
(22) Date de dépôt: 29.05.2007
(51) Int. Cl.: B60T 11/22, F16B 21/08

(54) **Agencement d'alimentation en liquide de freinage d'un maître cylindre de véhicule automobile**
Bremsflüssigkeitsversorgungsanordung für ein Hauptbremszylinder eines Kraftfahrzeugs
Arrangement for supplying brake fluid to the master brake cylinder of an automobile

(30) Priorité: 21.06.2006 FR 0605732
(43) Date de publication de la demande: 26.12.2007
(73) Titulaire: ROBERT BOSCH GMBH, 70442 Stuttgart (DE)
(72) Inventeur: Lhuillier, Laurent, 93150 Le Blanc Mesnil (FR); Quiniou, Nicolas, 93250 Villemonble (FR); Gaffe, François, 93140 Bondy (FR)
(74) Mandataire: Hurwic, Aleksander Wiktor

(56) Documents cités:
- EP-A- 0 994 262
- WO-A-92/19480
- FR-A- 2 841 201
- FR-A1- 2 779 189
- JP-A- 9 286 318

## Description

L'invention concerne un agencement d'alimentation en liquide de freinage d'un maître-cylindre de freinage de véhicule automobile.

L'invention concerne plus particulièrement un agencement d'alimentation en liquide de freinage d'un maître-cylindre de freinage de véhicule automobile, du type qui comporte un réservoir supérieur d'alimentation dont une empreinte inférieure est destinée à coopérer avec une empreinte supérieure complémentaire formée à la surface externe d'un corps du maître-cylindre, et du type dans lequel au moins un premier perçage horizontal du réservoir, qui débouche à l'extérieur du réservoir et au droit de son empreinte, coïncide avec au moins un deuxième perçage horizontal du corps du maître-cylindre, qui débouche à l'extérieur du corps du maître-cylindre et au droit de son empreinte, pour immobiliser le réservoir par rapport au corps du maître-cylindre en introduisant un élément axial d'immobilisation dans les premier et deuxième perçages.

On connaît de nombreux exemples d'agencements de ce type.

Dans de tels agencements, l'élément axial d'immobilisation est généralement constitué d'une vis qui est introduite dans les premier et deuxième perçages. Au moins un des premier et deuxième perçages est fileté pour permettre l'immobilisation axiale de la vis.

Cette configuration nécessite de réaliser un filetage dans le premier et/ou le deuxième perçage, ce qui grève sensiblement le coût de fabrication du réservoir et/ou du corps du maître-cylindre.

Par ailleurs, lors de l'assemblage, le montage de la vis ne peut être fait que par un opérateur ou par un robot d'assemblage qui combine un mouvement d'avancée de la vis et de rotation de celle-ci.

Pour remédier à cet inconvénient, l'invention propose un agencement du type décrit précédemment dans lequel l'élément d'immobilisation axial est constitué d'une goupille.

Dans ce but, l'invention propose un agencement du type décrit précédemment, caractérisé en ce que l'élément axial d'immobilisation est constitué d'une goupille dont au moins une partie, qui est destinée à être introduit dans au moins les premier et deuxième perçages, comporte une portée à trois lobes radiaux, pour empêcher l'extraction spontanée dudit élément axial.

Selon d'autres caractéristiques de l'invention :
- le réservoir comporte une empreinte femelle comportant un premier et un troisième perçages qui sont agencés coaxialement de part et d'autre d'un deuxième perçage formés dans les bords opposés d'une empreinte mâle, complémentaire de l'empreinte femelle, qui est portée par le corps du maître-cylindre,
- la goupille comporte un première partie de préhension et une deuxième partie de fixation, qui comporte la portée à lobes radiaux, qui traverse successivement le premier perçage du réservoir, le deuxième perçage du corps du maître-cylindre, et le troisième perçage du réservoir,
- la partie de fixation de la goupille comporte successivement, de son extrémité jointive avec la partie de préhension vers son extrémité libre :
   - un premier tronçon de diamètre élevé, qui est destiné à être reçu dans le premier perçage du réservoir,
   - un deuxième tronçon, d'un diamètre qui est inférieur à celui du premier tronçon et qui correspond sensiblement au diamètre du deuxième perçage du corps du maître-cylindre, qui comporte la portée à lobes radiaux,
   - un troisième tronçon, de même diamètre que le deuxième tronçon, qui est destiné à être reçu dans le troisième perçage du réservoir, et dont l'extrémité libre est conformée en tronc de cône pour faciliter l'introduction de la goupille dans les deuxième perçage et troisième perçage,
- la portée à lobes comporte au moins trois lobes en forme de nervures qui s'étendent radialement suivant l'orientation axiale, qui font saille à la surface d'une partie de la longueur du deuxième tronçon, et qui sont répartis angulairement de manière régulière autour du deuxième tronçon,
- la partie de préhension comporte une pluralité d'éléments de préhension en saillie,

D'autres caractéristiques et avantages de l'invention apparaîtront à la lecture de la description détaillée qui suit pour la compréhension de laquelle on se reportera aux dessins annexés dans lesquels :
- la figure 1 est une vue de détail en perspective éclatée avec arrachement d'un agencement d'alimentation selon l'invention ;
- la figure 2 est une vue de détail en perspective assemblée avec arrachement de l'agencement de la figure 1 ;
- la figure 3 est une vue de détail en perspective de la goupille de l'agencement selon l'invention./

Dans la description qui va suivre, des chiffres de référence identiques désignent des pièces identiques ou ayant des fonctions similaires.

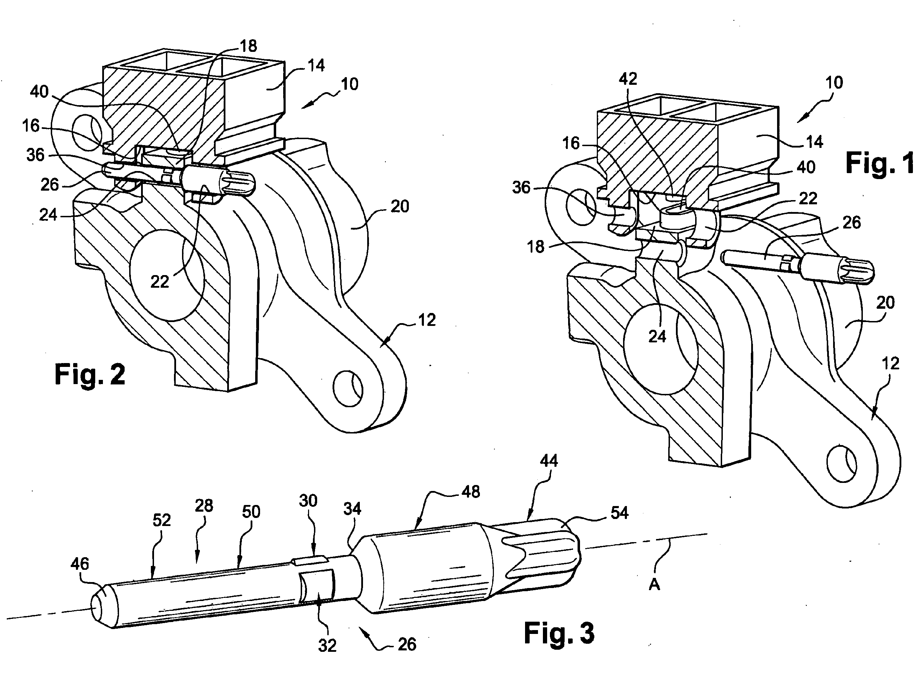

Par convention, les termes "avant", "arrière", supérieur", "inférieur" désignent respectivement des éléments ou des positions orientés respectivement vers la gauche, la droite, le haut, ou le bas des figures 1 à 3.

On a représenté sur les figures 1 et 2 un agencement 10 d'alimentation en liquide de freinage d'un maître-cylindre 12 de freinage de véhicule automobile.

De manière connue, l'agencement 10 comporte un réservoir supérieur 14 d'alimentation dont une empreinte inférieure 16 est destinée à coopérer avec une empreinte supérieure 18 complémentaire formée à la surface externe d'un corps 20 du maître-cylindre 12.

De manière connue, au moins un premier perçage 22 horizontal du réservoir 14, qui débouche à l'extérieur du réservoir 14 et au droit de son empreinte 16, coïncide avec au moins un deuxième perçage horizontal 24 du corps du maître-cylindre, qui débouche à l'extérieur du corps 20 du maître-cylindre 12 et au droit de son empreinte 18, pour immobiliser le réservoir 14 par rapport au corps 20 du maître-cylindre 12 en introduisant un élément 26 axial d'immobilisation dans les premier et deuxième perçages 22, 24.

Dans un agencement conventionnel de ce type, l'élément axial d'immobilisation est généralement constitué d'une vis qui est introduite dans les premier et deuxième perçages. Au moins un des premier et deuxième perçages est fileté pour permettre l'immobilisation axiale de la vis.

Cette configuration nécessite de réaliser un filetage dans le premier et/ou le deuxième perçage, ce qui grève sensiblement le coût de fabrication du réservoir et/ou du corps du maître-cylindre.

Par ailleurs, lors de l'assemblage, le montage de la vis ne peut être fait que par un opérateur ou par un robot d'assemblage qui combine un mouvement d'avancée de la vis et de rotation de celle-ci.

Pour remédier à cet inconvénient, l'invention propose un agencement du type décrit précédemment dans lequel l'élément 26 d'immobilisation axial est constitué d'une goupille.

Dans ce but, comme l'illustrent les figures 1 à 3, l'invention propose un agencement du type décrit précédemment, caractérisé en ce que l'élément 26 axial d'immobilisation est constitué d'une goupille dont au moins une partie 28, qui est destinée à être introduite dans au moins les premier et deuxième perçages 22, 24, comporte une portée 30 à lobes 32 radiaux, pour empêcher l'extraction spontanée dudit élément axial 26.

Plus particulièrement, comme l'illustre la figure 1, le réservoir 14 comporte une empreinte inférieure femelle 16 comportant un premier et un troisième perçages 22, 36 qui sont agencés coaxialement de part et d'autre d'un deuxième perçage 24 formé dans les bords opposés d'une empreinte supérieure mâle 18, complémentaire de l'empreinte femelle 34, qui est portée par le corps 20 du maître-cylindre.

Il sera compris que l'agencement des empreintes 16, 18 n'est pas limitatif de l'invention, et que l'empreinte mâle pourrait être portée par le réservoir 14, tout comme l'empreinte femelle pourrait être portée par le corps 20 du maître cylindre.

L'empreinte mâle du corps du maître-cylindre peut notamment comporter une perçage vertical 40 qui est destiné à recevoir une canule 42 faisant saillie dans l'empreinte femelle du réservoir 14, pour permettre l'alimentation en liquide hydraulique du maître-cylindre 12 par le réservoir 14.

Dans le mode de réalisation préféré de l'invention, comme l'illustre la figure 3, la goupille 26 comporte un première partie 44 de préhension et une deuxième partie 28 de fixation, qui comporte la portée 30 à lobes 32 radiaux. Comme l'illustre la figure 2, cette deuxième partie 28 de fixation traverse successivement le premier perçage 22 du réservoir 14, le deuxième perçage 24 du corps 20 du maître-cylindre 12, et le troisième perçage 36 du réservoir 14.

Plus particulièrement, comme l'illustrent les figures 2 et 3, la partie 28 de fixation de la goupille 26 comporte successivement, de son extrémité 34 jointive avec la partie 44 de préhension vers son extrémité libre 46 :
- un premier tronçon 48 de diamètre élevé, qui est destiné à être reçu dans le premier perçage 22 du réservoir 14,
- un deuxième tronçon 50, d'un diamètre qui est inférieur à celui du premier tronçon 48 et qui correspond sensiblement au diamètre du deuxième perçage 24 du corps 20 du maître-cylindre 12, qui comporte la portée 30 à lobes radiaux 32,
- un troisième tronçon 52, de même diamètre que le deuxième tronçon 50, qui est destiné à être reçu dans le troisième perçage 36 du réservoir, et dont l'extrémité libre 46 est conformée en tronc de cône pour faciliter l'introduction de la goupille 26 dans les deuxième perçage 24 et troisième perçage 36.

Conformément à l'invention la portée 30 à lobes 32 comporte au moins trois lobes 32 en forme de nervures qui s'étendent radialement suivant l'orientation axiale "A", qui font saille à la surface d'une partie de la longueur du deuxième tronçon **50**, et qui sont répartis angulairement de manière régulière autour du deuxième tronçon **50**.

A la figure 3, on a représentée une portée 30 comportant trois lobes 32, mais il sera compris que cette disposition n'est pas limitative de l'invention. La portée 30 pourrait notamment comporter un nombre supérieur de lobes 32, à cette réserve toutefois que le nombre de lobes influant sur leur taille, les lobes 32 doivent être d'une dimension suffisante pour permettre leur flexion radiale lors du démontage de la gouille 26.

Enfin, la partie 44 de préhension comporte une pluralité d'éléments 54 de préhension en saillie pour permettre un démontage manuel de la goupille 26.

A la figure 3, ces éléments 54 ont été représentés comme des nervures, mais il sera compris qu'il pourra aussi s'agir d'éléments moletés bien connus de l'état de la technique.

L'invention permet donc une fixation simplifiée d'un réservoir 14 sur le corps 20 d'un maître-cylindre 12.

## Revendications

1. Agencement (10) d'alimentation en liquide de freinage d'un maître-cylindre (12) de freinage de véhicule automobile, du type qui comporte un réservoir (14) supérieur d'alimentation dont une empreinte inférieure (16) est destinée à coopérer avec une empreinte supérieure (18) complémentaire formée à la surface externe d'un corps (20) du maître-cylindre (10), et du type dans lequel au moins un premier perçage (22) horizontal du réservoir (14), qui débouche à l'extérieur du réservoir (14) et au droit de son empreinte, coïncide avec au moins un deuxième perçage (24) horizontal du corps (20) du maître-cylindre (12), qui débouche à l'extérieur du corps du maître-cylindre (12) et au droit de son empreinte (18), pour immobiliser le réservoir (14) par rapport au corps (20) du maître-cylindre (12) en introduisant un élément (26) axial d'immobilisation dans les premier et deuxième perçages (22, 24),
**caractérisé en ce que** l'élément axial d'immobilisation est constitué d'une goupille (26) dont au moins une partie (28), qui est destinée à être introduite dans au moins les premier et deuxième perçages (22, 24), comporte une portée (30) à lobes (32) radiaux, pour empêcher l'extraction spontanée dudit élément axial (26).

2. Agencement (10) selon la revendication précédente,
**caractérisé en ce que** le réservoir (14) comporte une empreinte femelle (16) comportant un premier et un troisième perçages (22, 36) qui sont agencés coaxialement de part et d'autre d'un deuxième perçage (24) formés dans les bords opposés d'une empreinte mâle (18), complémentaire de l'empreinte femelle (16), qui est portée par le corps (20) du maître-cylindre (12).

3. Agencement (10) selon la revendication précédente,
**caractérisé en ce que** la goupille (26) comporte un première partie (44) de préhension et une deuxième partie (28) de fixation, qui comporte la portée (30) à lobes (32) radiaux, qui traverse successivement le premier perçage (22) du réservoir (14), le deuxième perçage (24) du corps (20) du maître-cylindre (12), et le troisième perçage (36) du réservoir (14).

4. Agencement (10) selon la revendication précédente,
**caractérisé en ce que** la partie (28) de fixation de la goupille (26) comporte successivement, de son extrémité jointive avec la partie (44) de préhension vers son extrémité libre (46) :
- un premier tronçon (48) de diamètre élevé, qui est destiné à être reçu dans le premier perçage (22) du réservoir (14),
- un deuxième tronçon (50), d'un diamètre qui est inférieur à celui du premier tronçon (48) et qui correspond sensiblement au diamètre du deuxième perçage (24) du corps (20) du maître-cylindre (12), qui comporte la portée (30) à lobes (32) radiaux,
- un troisième tronçon (52), de même diamètre que le deuxième tronçon (50), qui est destiné à être reçu dans le troisième perçage (36) du réservoir, et dont l'extrémité libre (46) est conformée en tronc de cône pour faciliter l'introduction de la goupille (26) dans les deuxième perçage (24) et troisième perçage (36).

5. Agencement (10) selon la revendication précédente,
**caractérisé en ce que** la portée (30) à lobes (32) comporte au moins trois lobes en forme de nervures qui s'étendent radialement suivant l'orientation axiale (A), qui font saillie à la surface d'une partie de la longueur du deuxième tronçon (**50**), et qui sont répartis angulairement de manière régulière autour du deuxième tronçon (**50**).

6. Agencement (10) selon l'une des revendications 3 à 5,
**caractérisé en ce que** la partie (44) de préhension comporte une pluralité d'éléments (54) de préhension en saillie.

## Claims

1. Arrangement (10) for supplying brake fluid to a brake master cylinder (12) of a motor vehicle, of the type which comprises an upper supply reservoir (14) of which a lower impression (16) is intended to engage with a complementary upper impression (18) formed on the external surface of a body (20) of the master cylinder (12), and of the type in which at least a first horizontal drilling (22) in the reservoir (14), which opens outside the reservoir (14) and in line with the impression thereof, coincides with at least a second horizontal drilling (24) in the body (20) of the master cylinder (12), which opens outside the body of the master cylinder (12) and in line with the impression (18) thereof, in order to immobilize the reservoir (14) with respect to the body (20) of the master cylinder (12) by inserting an axial immobilizing element (26) into the first and second drillings (22, 24), **characterized in that** the axial immobilizing element consists of a pin (26) of which at least one part (28), which is intended to be inserted into at least the first and second drillings (22, 24), comprises a bearing surface (30) with radial lobes (32) in order to prevent the spontaneous extraction of the said axial element (26).

2. Arrangement (10) according to the preceding claim, **characterized in that** the reservoir (14) comprises a female impression (16) comprising first and third drillings (22, 36) which are arranged coaxially one on either side of a second drilling (24) formed in the opposed edges of a male impression (18), complementary with the female impression (16), which is borne by the body (20) of the master cylinder (12).

3. Arrangement (10) according to the preceding claim, **characterized in that** the pin (26) comprises a first gripping part (44) and a second fastening part (28) which comprises the bearing surface (30) with radial lobes (32) and which passes successively through the first drilling (22) in the reservoir (14), through the second drilling (24) in the body (20) of the master cylinder (12), and through the third drilling (36) in the reservoir (14).

4. Arrangement (10) according to the preceding claim, **characterized in that** the fastening part (28) of the pin (26) successively comprises, from its end adjoining the gripping part (44) to its free end (46):
- a first portion (48) of increased diameter, which is intended to be received in the first drilling (22) in the reservoir (14),
- a second portion (50), having a diameter which is smaller than the diameter of the first portion (48) and which substantially corresponds to the diameter of the second drilling (24) in the body (20) of the master cylinder (12), which comprises the bearing surface (30) with radial lobes (32),
- a third portion (52), having the same diameter as the second portion (50), which is intended to be received in the third drilling (36) in the reservoir and of which the free end (46) is configured as a truncated cone in order to facilitate the insertion of the pin (26) into the second drilling (24) and third drilling (36).

5. Arrangement (10) according to the preceding claim, **characterized in that** the bearing surface (30) with lobes (32) comprises at least three lobes in the form of ribs which extend radially with respect to the axial orientation (A), which project from the surface of part of the length of the second portion (50), and which are angularly distributed in a uniform manner around the second portion (50).

6. Arrangement (10) according to one of Claims 3 to 5, **characterized in that** the gripping part (44) comprises a plurality of projecting gripping elements (54).

## Patentansprüche

1. Anordnung (10) zur Versorgung eines Hauptbremszylinders eines Kraftfahrzeugs mit Bremsflüssigkeit, vom Typ mit einem oberen Versorgungsbehälter (14), von welchem eine untere Prägung (16) dazu bestimmt ist, mit einer komplementären oberen Prägung (18) zusammenzuwirken, die an der Außenfläche eines Körpers (20) des Hauptzylinders (10) gebildet ist, und vom Typ, in welchem mindestens eine erste horizontale Bohrung (22) des Behälters (14), die außerhalb des Behälters (14) und senkrecht zur dessen Prägung mündet, mit mindestens einer zweiten horizontalen Bohrung (24) des Körpers (20) des Hauptzylinders (12) übereinstimmt, die außerhalb des Körpers des Hauptzylinders (12) und senkrecht zu dessen Prägung (18) mündet, um den Behälter (14) bezüglich des Körpers (20) des Hauptzylinders (12) festzulegen, indem ein axiales Festlegungselement (26) in die erste und zweite Bohrung (22, 24) eingeführt wird,
**dadurch gekennzeichnet, dass** das axiale Festlegungselement aus einem Zapfen (26) besteht, von welchem mindestens ein Teil (28), der dazu bestimmt ist, in mindestens die erste und zweite Bohrung (22, 24) eingeführt zu werden, eine Auflagefläche (30) mit radialen Lappen (32) aufweist, um das spontane Herausziehen des axialen Elements (26) zu verhindern.

2. Anordnung (10) nach dem vorhergehenden Anspruch, **dadurch gekennzeichnet, dass** der Behälter (14) eine vertiefte Prägung (16) mit einer ersten und dritten Bohrung (22, 36) aufweist, die koaxial auf der einen und anderen Seite einer zweiten Bohrung (24) angeordnet und in den entgegengesetzten Rändern einer erhabenen Prägung (18) gebildet sind, welche zur vertieften Prägung (16) komplementär ist, die durch den Körper (20) des Hauptzylinders (12) getragen ist.

3. Anordnung (10) nach dem vorhergehenden Anspruch, **dadurch gekennzeichnet, dass** der Zapfen (26) einen ersten Teil zum Greifen (44) und einen zweiten Teil zum Befestigen (28) aufweist, der die Auflagefläche (30) mit den radialen Lappen (32) aufweist, der nacheinander durch die erste Bohrung (22) des Behälters (14), die zweite Bohrung (24) des Körpers (20) des Hauptzylinders (12) und die dritte Bohrung (36) des Behälters (14) hindurchgeht.

4. Anordnung (10) nach dem vorhergehenden Anspruch, **dadurch gekennzeichnet, dass** der Teil (28) zum Befestigen des Zapfens (26) ausgehend von seinem an dem Teil zum Greifen (44) angrenzenden Ende bis zu seinem freien Ende (46) nacheinander Folgendes aufweist:
- einen ersten Abschnitt (48) mit großem Durchmesser, der dazu bestimmt ist, in der ersten Bohrung (22) des Behälters (14) aufgenommen zu werden,
- einen zweiten Abschnitt (50) mit einem Durchmesser, der kleiner ist als derjenige des ersten Abschnitts (48) und im Wesentlichen dem Durchmesser der zweiten Bohrung (24) des Körpers (20) des Hauptzylinders (12) aufweist, welcher die Auflagefläche (30) mit radialen Lappen (32) aufweist,
- einen dritten Abschnitt (52) mit dem gleichen Durchmesser wie der zweite Abschnitt (50), der dazu bestimmt ist, in der dritten Bohrung (36) des Behälters aufgenommen zu werden und dessen freies Ende (46) kegelstumpfförmig ausgebildet ist, um das Einführen des Zapfens (26) in die zweite Bohrung (24) und in die dritte Bohrung (36) zu erleichtern.

5. Anordnung (10) nach dem vorhergehenden Anspruch, **dadurch gekennzeichnet, dass** die Auflagefläche (30) mit radialen Lappen (32) mindestens drei rippenförmige Lappen aufweist, die sich entlang der axialen Ausrichtung (A) erstrecken, an der Oberfläche eines Teils der Länge des zweiten Abschnitts (50) hervorstehen und winkelmäßig um den zweiten Abschnitt (50) herum gleichmäßig verteilt sind.

6. Anordnung (10) nach einem der Ansprüche 3 bis 5, **dadurch gekennzeichnet, dass** der Teil zum Greifen (44) eine Vielzahl von hervorstehenden Greifelementen (54) aufweist.
